# FASCICULE DE BREVET EUROPEEN

(11) **EP 3 112 952 B1**
(45) Date de publication et mention de la délivrance du brevet: **17.01.2018**
(21) Numéro de dépôt: 16169944.2
(22) Date de dépôt: 17.05.2016
(51) Int. Cl.: G04B 17/34

(54) **PROCEDE DE FABRICATION COMPORTANT UNE ETAPE DE MONTAGE MODIFIEE**
HERSTELLUNGSVERFAHREN, DAS EINEN MODIFIZIERTEN MONTAGESCHRITT UMFASST
MANUFACTURING METHOD COMPRISING A MODIFIED MOUNTING STEP

(30) Priorité: 16.06.2015 EP 15172339
(43) Date de publication de la demande: 04.01.2017
(73) Titulaire: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Goulette, Ludivine

(56) Documents cités:
- EP-A1- 1 705 533
- EP-A1- 2 107 433
- EP-A1- 2 317 406

## Description

### Domaine de l'invention

L'invention se rapporte à un procédé de fabrication d'un composant horloger comportant une étape de montage modifiée et, plus précisément, une telle étape permettant une planéité de surface améliorée.

### Arrière-plan de l'invention

Il est connu du document WO 2015/185423 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne doive pas excéder 0,5 micromètre sous peine que celles-ci ne puissent pas être soudées.

### Résumé de l'invention

Le but de la présente invention est de pallier tout ou partie les inconvénients cités précédemment en proposant un nouveau procédé de fabrication avec au moins une surface de contact comportant une planéité améliorée permettant l'assemblage des pièces par soudage.

A cet effet, selon un premier mode de réalisation, l'invention se rapporte à un procédé de fabrication d'un composant horloger comportant les étapes suivantes :
- former une première pièce à base de métal et une deuxième pièce à base de silicium ou à base de céramique ;
- monter une partie intermédiaire sur une portée de la première pièce ;
- monter une première surface de la deuxième pièce sur une surface de la partie intermédiaire et une deuxième surface de la deuxième pièce sur une surface de la première partie ;
- souder, par rayonnement électromagnétique du type laser, la surface de la deuxième pièce montée sur la surface de la partie intermédiaire afin de les solidariser et former le composant horloger.

De plus, selon un deuxième mode de réalisation, l'invention se rapporte à un procédé de fabrication d'un composant horloger comportant les étapes suivantes :
- former une première pièce à base de métal et une deuxième pièce à base de silicium ou à base de céramique ;
- souder, par rayonnement électromagnétique du type laser, une surface de la deuxième pièce sur une partie intermédiaire afin de les solidariser ;
- monter l'ensemble deuxième pièce - partie intermédiaire sur la première pièce afin que la pièce intermédiaire soit montée sur une portée de la première pièce et qu'une surface de la deuxième pièce soit montée sur une surface de la première partie pour former le composant horloger.

On comprend donc que, selon les deux modes de réalisation, le procédé de fabrication utilise une partie intermédiaire avec une face dont au moins une surface est parfaitement plane et perpendiculaire afin de garantir le soudage avec la deuxième pièce.

Conformément à d'autres variantes avantageuses de l'invention :
- la deuxième pièce comporte en outre au moins un revêtement partiel de métal, d'oxyde de silicium, de nitrure de silicium, de carbure de silicium ou d'un allotrope du carbone ;
- la première pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages ;

- la partie intermédiaire comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages ;
- la deuxième pièce forme tout ou partie d'un boîtier, d'un cadran, d'un réhaut, d'une glace, d'une lunette, d'un poussoir, d'une couronne, d'un fond de boîtier, d'une aiguille, d'un bracelet, d'un spiral, d'un balancier, d'une ancre, d'un pont, d'une masse oscillante, d'un mobile, d'une roue d'échappement..

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier - spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document WO 2015/185423 ;
- la figure 5 est une représentation en coupe d'un assemblage selon l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une autre pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

Comme expliqué ci-dessus, l'autre pièce peut comporter le même type de matériau ou un autre type de matériau. Ainsi, préférentiellement, l'autre pièce est à base de métal et peut comporter un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

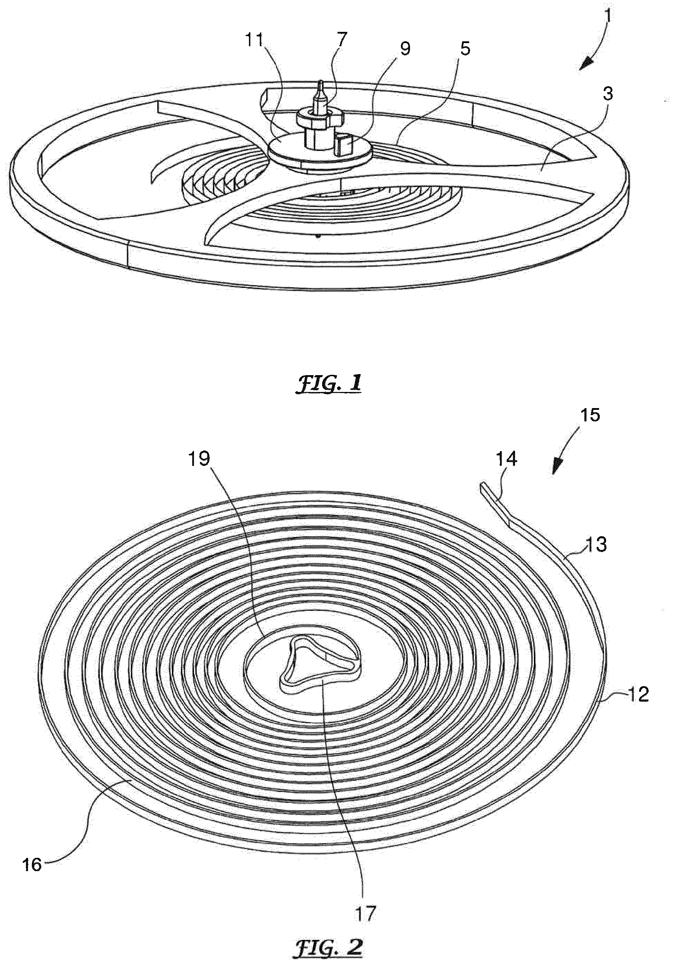

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'arbre notamment pour autoriser son centrage par rapport à ce dernier.

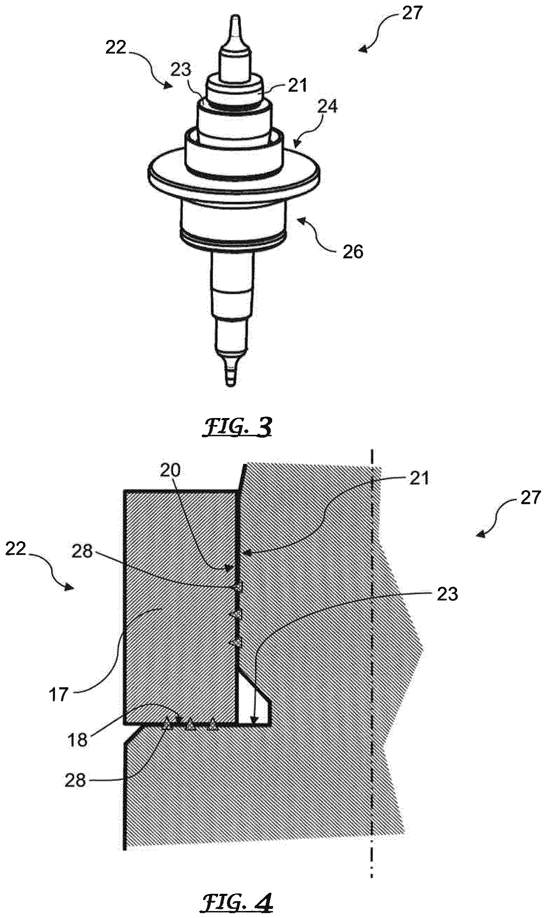

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 est soudée à la virole 17 comme enseigné dans le document WO 2015/185423.

Toutefois, dans le cadre du développement de l'enseignement du document WO 2015/185423, il est rapidement ressorti que l'interstice entre les pièces ne doive pas excéder 0,5 micromètre sous peine que celles-ci ne puissent pas être soudées.

Selon l'invention, le procédé de fabrication comporte une étape destinée à rapporter une partie intermédiaire afin d'offrir une face avec une surface parfaitement plane et perpendiculaire garantissant le soudage.

Selon un premier mode de réalisation, le procédé selon l'invention comporte une première étape destinée à former une première pièce à base de métal comme dans le présent exemple un arbre 37 et une deuxième pièce comme dans le présent exemple un spiral 15 à base de silicium.

Le procédé se poursuit avec une deuxième étape destinée à monter une partie intermédiaire 41 comme, par exemple, une rondelle, sur une portée 33 de la première pièce formée par l'arbre 37. Avantageusement, cette partie intermédiaire 41 possède une surface parfaitement plane et perpendiculaire garantissant le soudage avec la deuxième pièce formée notamment par la virole 17 du spiral 15.

La partie intermédiaire 41 peut, par conséquent, également être formée à base de métal et, par exemple, être chassée contre la tige 31 sensiblement verticale de la première pièce formée par l'arbre 37. On comprend donc que la deuxième pièce formée notamment par la virole 17 ne sera plus soudée sur la tige 21 et/ou la portée 23 comme dans l'exemple de la figure 4 mais sur la tige 31 et/ou la partie intermédiaire 41.

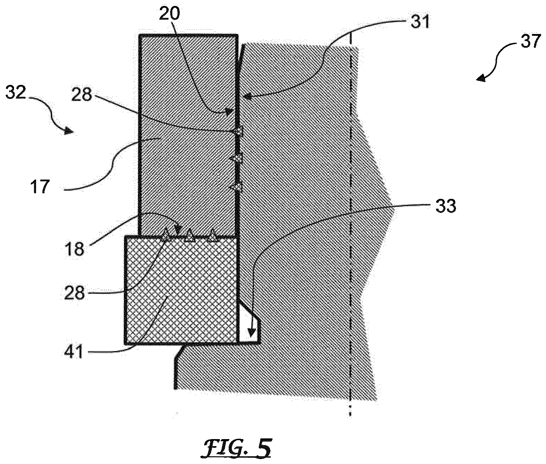

Le procédé comporte ensuite une troisième étape destinée à monter une surface de la deuxième pièce formée notamment par la virole 17 sur une surface de la partie intermédiaire 41 comme illustré à la figure 5.

Enfin, le procédé se termine avec une étape destinée à souder, par rayonnement électromagnétique du type laser, la surface de la deuxième pièce formée notamment par la virole 17 montée sur la surface de la partie intermédiaire 41 afin de les solidariser selon les soudures 28 avec la garantie que le spiral 15 et l'arbre 37 soient solidarisés grâce à la bonne planéité de la pièce intermédiaire 41.

Bien entendu, comme visible à la figure 5, des soudures 28 pourraient, de manière alternative ou de manière additionnelle, être formées lors de cette dernière étape entre la tige 31 et la virole 17.

Selon un deuxième mode de réalisation, le procédé selon l'invention comporte une première étape destinée à former une première pièce à base de métal comme dans le présent exemple un arbre 37 et une deuxième pièce comme dans le présent exemple un spiral 15 à base de silicium.

Le procédé se poursuit avec une deuxième étape destinée à souder, par rayonnement électromagnétique du type laser, une surface de la deuxième pièce formée notamment par la virole 17 du spiral 15 sur une partie intermédiaire 41 comme, par exemple, une rondelle afin de les solidariser.

Avantageusement, cette partie intermédiaire 41 possède une surface parfaitement plane et perpendiculaire garantissant le soudage avec la deuxième pièce formée notamment par la virole 17 selon les soudures 28 avec la garantie que le spiral 15 et la partie intermédiaire 41 soient solidarisés grâce à la bonne planéité de la pièce intermédiaire 41.

La partie intermédiaire 41 peut, par conséquent, également être formée à base de métal. On comprend donc que la deuxième pièce formée notamment par la virole 17 ne sera plus soudée sur la tige 21 et/ou la portée 23 comme dans l'exemple de la figure 4 mais sur la tige 31 et/ou la partie intermédiaire 41.

Enfin, le procédé se termine avec une étape destinée à monter l'ensemble deuxième pièce formée notamment par la virole 17 - partie intermédiaire 41 sur une portée 33 de la première pièce formée par l'arbre 37 avec la garantie que le spiral 15 et l'arbre 37 soient solidarisés.

Comme visible à la figure 5, des soudures 28 pourraient, de manière additionnelle, être formées lors de cette dernière étape entre la tige 31 et la virole 17.

Bien entendu, la présente invention ne se limite pas à l'exemple illustré mais est susceptible de diverses variantes et modifications qui apparaîtront à l'homme de l'art. En particulier, la pièce intermédiaire 41 ne saurait se limiter à une section carrée formant un anneau. A titre d'exemple non limitatif, la section pourrait alternativement être en forme de L afin de former un anneau muni d'une collerette monobloc ou d'une bague monobloc. On comprend alors que la partie intermédiaire 41 pourrait alors recevoir seule la virole 17 en fournissant deux surfaces respectivement verticale et horizontale dont les planéités sont améliorées par rapport respectivement aux surfaces de la tige 31 et de la portée 33.

## Revendications

1. Procédé de fabrication d'un composant horloger comportant les étapes suivantes :
- former une première pièce (37) à base de métal et une deuxième pièce (15) à base de silicium ou à base de céramique ;
- monter une partie intermédiaire (41) sur une portée (33) de la première pièce (37) ;
- monter une première surface (18) de la deuxième pièce (15) sur une surface de la partie intermédiaire (41) et une deuxième surface (20) de la deuxième pièce (15) sur une surface (31) de la première partie (37) ;
- souder, par rayonnement électromagnétique du type laser, la surface (18) de la deuxième pièce (15) montée sur la surface de la partie intermédiaire (41) afin de les solidariser et former le composant horloger.

2. Procédé de fabrication d'un composant horloger comportant les étapes suivantes :
- former une première pièce (37) à base de métal et une deuxième pièce (15) à base de silicium ou à base de céramique ;
- souder, par rayonnement électromagnétique du type laser, une surface (18) de la deuxième pièce (15) sur une partie intermédiaire (41) afin de les solidariser ;
- monter l'ensemble deuxième pièce (15) - partie intermédiaire (41) sur la première pièce (37) afin que la pièce intermédiaire (41) soit montée sur une portée (33) de la première pièce (37) et qu'une surface (20) de la deuxième pièce (15) soit montée sur une surface (31) de la première partie (37) pour former le composant horloger.

3. Procédé selon la revendication 1 ou 2, **caractérisée en ce que** la deuxième pièce (15) comporte en outre au moins un revêtement partiel de métal, d'oxyde de silicium, de nitrure de silicium, de carbure de silicium ou d'un allotrope du carbone.

4. Procédé selon l'une des revendications précédentes, **caractérisée en ce que** la première pièce (37) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

5. Procédé selon l'une des revendications précédentes, **caractérisée en ce que** la partie intermédiaire (41) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

6. Procédé selon l'une des revendications précédentes, **caractérisé en ce que** la deuxième pièce (15) forme tout ou partie d'un boîtier, d'un cadran, d'un réhaut, d'une glace, d'une lunette, d'un poussoir, d'une couronne, d'un fond de boîtier, d'une aiguille, d'un bracelet, d'un spiral, d'un balancier, d'une ancre, d'un pont, d'une masse oscillante, d'un mobile, d'une roue d'échappement.

## Patentansprüche

1. Verfahren zum Herstellen einer Uhrenkomponente, umfassend die folgenden Schritte:
- Bilden eines ersten Teils (37) auf Metallbasis und eines zweiten Teils (15) auf Siliciumbasis oder auf Keramikbasis;
- Montieren eines Zwischenabschnitts (41) auf eine Auflagefläche (33) des ersten Teils (37);
- Montieren einer ersten Oberfläche (18) des zweiten Teils (15) auf eine Oberfläche des Zwischenabschnitts (41) und einer zweiten Oberfläche (20) des zweiten Teils (15) auf eine Oberfläche (31) des ersten Abschnitts (37);
- Verschweißen der Oberfläche (18) des zweiten Teils (15), die auf die Oberfläche des Zwischenabschnitts (41) montiert ist, durch elektromagnetische Strahlung des Laser-Typs, um beide miteinander zu verbinden und um die Uhrenkomponente zu bilden.

2. Verfahren zum Herstellen einer Uhrenkomponente, umfassend die folgenden Schritte:
- Bilden eines ersten Teils (37) auf Metallbasis und eines zweiten Teils (15) auf Siliciumbasis oder auf Keramikbasis;
- Verschweißen einer Oberfläche (18) des zweiten Teils (15) auf einem Zwischenabschnitt (41) durch elektromagnetische Strahlung des Laser-Typs, um sie miteinander zu verbinden;
- Montieren der Baugruppe aus dem zweiten Teil (15) und dem Zwischenabschnitt (41) auf das erste Teil (37), damit das Zwischenteil (41) auf eine Auflagefläche (33) des ersten Teils (37) montiert wird und damit eine Oberfläche (20) des zweiten Teils (15) auf eine Oberfläche (31) des ersten Abschnitts (37) montiert wird, um die Uhrenkomponente zu bilden.

3. Verfahren nach Anspruch 1 oder 2, **dadurch gekennzeichnet, dass** das zweite Teil (15) ferner zumindest eine Teilbeschichtung aus Metall, Siliciumoxid, Siliciumnitrid, Siliciumcarbid oder aus einem Kohlenstoffallotrop umfasst.

4. Verfahren nach einem der vorhergehenden Ansprüche, **dadurch gekennzeichnet, dass** das erste Teil (37) eine Eisenlegierung, eine Kupferlegierung, Nickel oder eine seiner Legierungen, Titan oder einer seiner Legierungen, Gold oder eine seiner Legierungen, Silber oder eine seiner Legierungen, Platin oder eine seiner Legierungen, Ruthenium oder eine seiner Legierungen, Rhodium oder eine seiner Legierungen oder Palladium oder eine seiner Legierungen enthält.

5. Verfahren nach einem der vorhergehenden Ansprüche, **dadurch gekennzeichnet, dass** der Zwischenabschnitt (41) eine Eisenlegierung, eine Kupferlegierung, Nickel oder eine seiner Legierungen, Titan oder eine seiner Legierungen, Gold oder eine seiner Legierungen, Silber oder eine seiner Legierungen, Platin oder einer seiner Legierungen, Ruthenium oder eine seiner Legierungen, Rhodium oder eine seiner Legierungen oder Palladium oder eine seiner Legierungen enthält.

6. Verfahren nach einem der vorhergehenden Ansprüche, **dadurch gekennzeichnet, dass** das zweite Teil (15) vollständig oder teilweise ein Gehäuse, ein Zifferblatt, einen Höhenring, ein Uhrenglas, eine Lünette, einen Drücker, eine Krone, einen Gehäuseboden, einen Zeiger, ein Armband, eine Spiralfeder, eine Unruh, einen Anker, eine Brücke, eine oszillierende Masse, ein Drehteil oder ein Hemmungsrad bildet.

## Claims

1. Method for fabrication of a timepiece component comprising the following steps:
- forming a first part (37) made from metal and a second part (15) made from silicon or ceramic;
- mounting an intermediate part (41) on a shoulder (33) of the first part (37);
- mounting a first surface (18) of the second part (15) on a surface of the intermediate part (41) and a second surface (20) of the second part (15) on a surface (31) of the first part (37);
- welding, by laser electromagnetic radiation, the surface (18) of the second part (15) mounted on the surface of the intermediate part (41), in order to secure them to each other and to form the timepiece component.

2. Method for fabrication of a timepiece component comprising the following steps:
- forming a first part (37) made from metal and a second part (15) made from silicon or ceramic;
- welding, by laser electromagnetic radiation, a surface (18) of the second part (15) onto an intermediate part (41), in order to secure them to each other;
- mounting the assembly of the second part (15) - intermediate part (41) onto the first part (37) so that the intermediate part (41) is mounted on a shoulder (33) of the first part (37) and so that a surface (20) of the second part (15) is mounted on a surface (31) of the first part (37) to form the timepiece component.

3. Method according to claim 1 or 2, **characterized in that** the second part (15) also includes at least a partial coating of metal, silicon oxide, silicon nitride, silicon carbide or an allotrope of carbon.

4. Method according to any of the preceding claims, **characterized in that** the first part (37) includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.

5. Method according to any of the preceding claims, **characterized in that** the intermediate part (41) includes an iron alloy, a copper alloy, nickel or an alloy thereof, titanium or an alloy thereof, gold or an alloy thereof, silver or an alloy thereof, platinum or an alloy thereof, ruthenium or an alloy thereof, rhodium or an alloy thereof, or palladium or an alloy thereof.

6. Method according to any of the preceding claims, **characterized in that** the second part forms all or part of a case, a dial, a flange, a crystal, a bezel, a push-piece, a crown, a case back, a hand, a bracelet or strap, a balance spring, a balance wheel, a pallet-lever, a bridge, an oscillating weight, a wheel or an escape wheel.
